# FASCICULE DE BREVET EUROPEEN

(11) **EP 3 774 160 B1**
(45) Date de publication et mention de la délivrance du brevet: **24.07.2024**
(21) Numéro de dépôt: 19722165.8
(22) Date de dépôt: 04.04.2019
(51) Int. Cl.: B23K 26/21, B23K 26/082, B23K 26/70

(54) **PROCÉDÉ ET DISPOSITIF DE SOUDAGE LASER D'UNE PREMIÈRE PIÈCE SUR UNE SECONDE PIÈCE**
VERFAHREN UND VORRICHTUNG ZUM LASERSCHWEISSEN EINER ERSTEN KOMPONENTE AN EINE ZWEITE KOMPONENTE
METHOD AND DEVICE FOR LASER WELDING A FIRST COMPONENT TO A SECOND COMPONENT

(30) Priorité: 04.04.2018 FR 1852908
(43) Date de publication de la demande: 17.02.2021
(73) Titulaire: Commissariat à l'Energie Atomique et aux Energies Alternatives, 75015 Paris (FR)
(72) Inventeur: JOST, Pierre, 38054 Grenoble Cedex 09 (FR); BEL, Michel, 38054 Grenoble Cedex 09 (FR); CANALE, Ivo, 38054 Grenoble Cedex 09 (FR); MASSON, Olivier, 38054 Grenoble Cedex 09 (FR); CLAUDE, Guillaume, 38054 Grenoble Cedex 09 (FR)
(74) Mandataire: Regimbeau
(86) Numéro de dépôt international: PCT/FR2019/050794
(87) Numéro de publication internationale: WO 2019/193293

(56) Documents cités:
- CN-U- 206 952 362
- AMADA MIYACHI EUROPE: "Laser Welding system for battery tab solutions - by Amada Miyachi Europe", 13 December 2016 (2016-12-13), XP054978995, Retrieved from the Internet <URL:https://www.youtube.com/watch?v=U5rIa5QVgbY>

## Description

### DOMAINE DE L'INVENTION

La présente invention concerne un procédé et un dispositif de soudage laser d'une première pièce sur une seconde pièce, notamment dans le cas où la première pièce est un collecteur de courant métallique et la seconde pièce métallique est un pôle d'accumulateur électrochimique métal-ion, et l'application dudit procédé à l'assemblage d'une batterie.

### ETAT DE LA TECHNIQUE

Une batterie est réalisée par assemblage d'une pluralité d'accumulateurs rendus solidaires les uns des autres par un flasque à l'intérieur duquel ils sont collés.

Lesdits accumulateurs sont connectés électriquement par des collecteurs de courant, qui se présentent généralement sous la forme de feuillets métalliques.

Chaque accumulateur présente une forme générale cylindrique ou prismatique, comprenant un pôle positif et un pôle négatif. Ces pôles positif et négatif peuvent se trouver sur deux faces opposées ou sur la même face de l'accumulateur.

Du fait des tolérances de fabrication des accumulateurs, ainsi que des variations de hauteur résultant de leur mise en place dans le flasque, les pôles à connecter électriquement ne sont pas nécessairement dans un même plan. Par conséquent, lors de la mise en place du collecteur de courant en regard des pôles, il peut exister un jeu entre le collecteur de courant et le pôle sur lequel le collecteur de courant doit être soudé.

Le soudage laser est une technique d'assemblage qui peut être avantageusement utilisée pour interconnecter des accumulateurs par soudure du collecteur de courant sur un pôle de chacun des accumulateurs.

Or, la technique de soudage laser nécessite que le collecteur de courant soit plaqué de manière stable contre le pôle de l'accumulateur à souder pendant l'application du faisceau laser.

Par ailleurs, dans la mesure où la batterie est susceptible d'être soumise à des vibrations pendant son utilisation, le cordon de soudure doit être suffisamment robuste pour ne pas se rompre sous l'effet de telles vibrations et permettre de maintenir une section de passage suffisante pour le courant électrique.

Le document CN 206952362, formant la base du préambule des revendications indépendantes, décrit un dispositif de soudage laser comprenant un masque de soudure destiné à venir en appui contre le collecteur de courant, et une tête laser auquel le masque de soudure est lié élastiquement par des ressorts. Cette liaison élastique permet d'absorber des différences de hauteur entre différents accumulateurs, afin de plaquer le collecteur de courant et le pôle de l'accumulateur malgré une potentielle variabilité dans la hauteur de l'accumulateur.

### EXPOSE DE L'INVENTION

Un but de l'invention est de concevoir un procédé et un dispositif de soudage laser qui permettent de former un cordon de soudure de bonne qualité et robuste entre une première pièce et une seconde pièce. En particulier, le dispositif mis en oeuvre doit permettre d'assurer facilement, pour chaque soudure d'un jeu constitué de la première et de la seconde pièce, que la distance focale du faisceau laser soit optimale, c'est-à-dire adaptée pour délivrer une énergie maximale et maîtrisée, c'est-à-dire répétable, au niveau de la zone de soudure.

A cet effet, l'invention propose un procédé de soudage laser d'une première pièce sur une seconde pièce comme défini dans la revendication 1.

Le masque de soudure présente une structure rigide au moins dans la direction du faisceau laser et est rigidement lié à la tête laser. Ainsi, la dimension du masque de soudure dans la direction dudit faisceau, qui définit la distance entre la tête laser et la zone de soudure, est constante, même lorsque le masque exerce un appui sur la zone de soudure. Tout au long du procédé de soudage, le faisceau laser présente donc une distance focale constante, optimisée pour délivrer le maximum d'énergie au niveau de la zone de soudure, et indépendante de la force d'appui appliquée. En particulier, lorsque l'on soude successivement deux jeux constitués chacun d'une première pièce et d'une seconde pièce, le masque assure une distance focale constante du faisceau laser d'un jeu à l'autre.

De manière particulièrement avantageuse, les première et seconde pièces et le masque de soudure restent fixes pendant la formation de la totalité du cordon de soudure.

La tête laser comprend avantageusement un système optique de focalisation programmable comprenant deux miroirs orientables pour positionner le faisceau laser à un emplacement déterminé de la zone de soudure.

Le masque de soudure présente avantageusement une forme extérieure tronconique.

Le passage traversant peut également présenter une paroi tronconique.

Selon un mode de réalisation, le cordon de soudure présente une forme fermée.

Selon un mode de réalisation, la surface d'appui s'étend de manière continue autour de la zone de soudure. De préférence, ladite surface d'appui s'étend sur au moins trois quarts du périmètre de la zone de soudure.

Selon une alternative, la surface d'appui s'étend de manière discontinue autour de la zone de soudure. De préférence, ladite surface d'appui est constituée d'au moins trois zones d'appui coplanaires espacées les unes des autres.

La tête laser peut émettre un faisceau laser pulsé ou un faisceau laser continu.

Selon une application avantageuse de l'invention, la première pièce est un collecteur de courant métallique et la seconde pièce est un accumulateur électrochimique métal-ion.

L'invention concerne également un procédé d'assemblage d'une batterie comprenant une pluralité d'accumulateurs, comprenant :
- le collage de chaque accumulateur dans un flasque,
- l'établissement d'une connexion électrique entre au moins deux accumulateurs par un collecteur de courant, par soudage laser dudit collecteur de courant sur un pôle respectif de chaque accumulateur au moyen du procédé décrit ci-dessus.

De manière particulièrement avantageuse, la position de la tête munie du masque de soudure est ajustée pour chaque accumulateur, de sorte à compenser une différence de hauteur entre deux accumulateurs.

Un autre objet de l'invention concerne un dispositif permettant la mise en oeuvre dudit procédé comme défini dans la revendication 7.

De manière avantageuse, ladite tête laser comprend un système optique de focalisation programmable comprenant deux miroirs orientables pour positionner le faisceau laser à un emplacement déterminé de la zone de soudure.

De préférence, le masque de soudure présente une forme extérieure tronconique se rétrécissant de la tête laser vers la surface d'appui. Par ailleurs, le passage traversant présente avantageusement une forme tronconique se rétrécissant de la tête laser vers la zone de soudure.

Selon un mode de réalisation, la surface d'appui s'étend de manière continue autour de la zone de soudure.

De manière alternative, la surface d'appui s'étend de manière discontinue autour de la zone de soudure.

Selon l'invention, le masque de soudure comprend un revêtement électriquement isolant sur au moins une partie de sa surface externe.

Ledit revêtement peut avantageusement comprendre une portion en céramique s'étendant sur la surface d'appui et sur une première portion de la surface extérieure adjacente à ladite surface d'appui.

Ledit revêtement peut également ou alternativement comprendre une portion en polymère s'étendant sur une seconde portion de la surface extérieure, opposée à la surface d'appui et adjacente à la première portion.

En revanche, la surface intérieure du masque de soudure est de préférence dépourvue d'un tel revêtement électriquement isolant.

### BREVE DESCRIPTION DES FIGURES

D'autres caractéristiques et avantages de l'invention ressortiront de la description détaillée qui va suivre, en référence aux dessins annexés sur lesquels :
- la figure 1 est un schéma de principe du soudage laser d'un collecteur de courant sur un accumulateur dans son flasque ;
- la figure 2 est un schéma de principe du dispositif de soudage selon un mode de réalisation de l'invention ;
- la figure 3 est une vue en perspective du pôle positif d'un accumulateur de type 18650 ;
- la figure 4 représente la zone d'appui de l'outil de soudage et la zone de soudure sur un accumulateur du type représenté sur la figure 3 ;
- les fzigures 5A et 5B sont respectivement une vue de côté et une vue en perspective d'un outil de soudage selon un mode de réalisation de l'invention ;
- la figure 6 représente schématiquement la focale du laser dans l'outil de soudage des figures 5A et 5B ;
- la figure 7 est une vue schématique en coupe d'un masque de soudure comprenant deux revêtements électriquement isolants différents, la partie droite de la figure étant un grossissement de la partie gauche au niveau de la zone d'appui du masque sur un collecteur de courant lors de son soudage sur un accumulateur ;
- la figure 8 est une vue schématique en coupe des éclaboussures projetées dans le masque lors de la soudure ;
- la figure 9 illustre la mise en oeuvre du soudage d'un collecteur de courant sur un accumulateur avec un dispositif selon l'invention ;
- la figure 10 illustre un cordon de soudure réalisé sur le pôle positif d'un accumulateur du type représenté sur la figure 3.

Pour des raisons de lisibilité des figures, tous les éléments n'ont pas nécessairement été représentés à l'échelle.

### DESCRIPTION DETAILLEE DE MODES DE REALISATION DE L'INVENTION

Dans la description qui suit, on s'intéresse essentiellement au cas de la soudure d'un collecteur de courant sur un accumulateur électrochimique métal-ion, qui est une application particulièrement avantageuse de l'invention. Cependant, l'invention s'applique de manière générale au soudage laser d'une première pièce sur une seconde pièce, lesdites pièces n'étant pas nécessairement métalliques. L'homme du métier pourra donc généraliser sans difficulté les modes de réalisation qui sont décrits plus bas en assimilant le collecteur de courant métallique à la première pièce et l'accumulateur à la seconde pièce. La forme desdites première et seconde pièces et celle du masque de soudure peuvent varier selon les applications envisagées ; toutefois, les deux pièces sont soudées l'une à l'autre au niveau d'une surface plane, qui comprend en son centre la zone de soudure dans laquelle est formé le cordon de soudure, et dans sa périphérie une ou plusieurs zone(s) d'appui pour le masque de soudure.

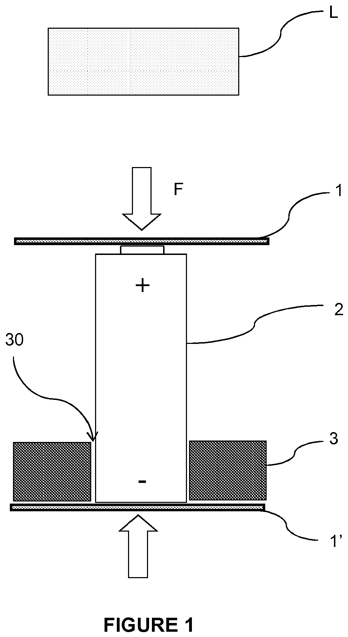

La figure 1 illustre le principe général du soudage laser mis en oeuvre pour l'assemblage d'une batterie.

Le dispositif de soudage comprend une tête laser L, pouvant émettre un faisceau laser pulsé ou continu, dans une direction sensiblement verticale.

Un accumulateur 2 a été préalablement collé dans un logement 30 prévu à cet effet dans un flasque 3. Bien que cela ne soit pas représenté, le flasque comporte une pluralité de logements destinés chacun à recevoir un accumulateur. Le flasque sert de support mécanique pour les accumulateurs et peut être réalisé en un matériau plastique, composite ou métallique.

L'accumulateur est logé dans le flasque en position verticale, c'est-à-dire que ses pôles positif (+) et négatif (-) sont alignés selon un axe vertical. Le fond du logement est ouvert pour permettre d'accéder au pôle -.

L'accumulateur 2 représenté présente une forme cylindrique, par exemple de type 18650, mais il va de soi que cette forme particulière n'est donnée qu'à titre illustratif et que l'accumulateur pourrait présenter une autre forme, notamment prismatique.

L'enveloppe de l'accumulateur peut être réalisée en différents matériaux, tels que l'aluminium, l'inox ou l'HILUMIN^{™} (acier revêtu d'une couche de nickel). Le pôle - de l'accumulateur est généralement constitué par un fond plat, tandis que le pôle + présente une tête en relief de diamètre plus faible que le pôle -.

Pour connecter électriquement l'accumulateur 2 à un autre accumulateur (non représenté), un collecteur de courant 1, 1' doit être soudé à chacun des deux pôles, le cordon de soudure assurant non seulement une liaison mécanique entre les deux pièces mais aussi une liaison électrique. Le cordon de soudure présente avantageusement la longueur la plus grande possible. Par ailleurs, le cordon de soudure présente avantageusement une forme fermée, qui augmente la robustesse de l'assemblage. D'autres formes de cordon de soudure sont également possibles selon l'application visée, par exemple un cordon en forme d'hélice, en forme de croix, etc.

Le collecteur de courant est formé par emboutissage et/ou découpe d'une tôle métallique selon une forme adaptée à la conception de la batterie. L'épaisseur du collecteur de courant est généralement comprise entre 0,1 et 1 mm. Le matériau du collecteur de courant peut être de l'aluminium, de l'inox, de l'acier ou du cuivre. Ces matériaux peuvent éventuellement avoir reçu un traitement de surface comme le nickelage, l'étamage. Naturellement, on choisira des matériaux compatibles en termes de soudure pour l'accumulateur et le collecteur de courant.

Selon les matériaux à souder, le soudage pourra s'effectuer par transparence ou par conduction thermique.

A cet effet, le collecteur de courant 1 doit être plaqué contre le pôle + de l'accumulateur 2 avec une force F pendant l'application du faisceau laser pour former le cordon de soudure.

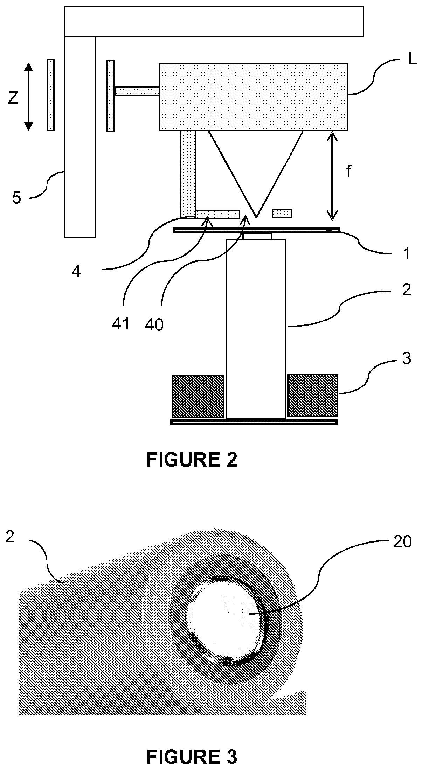

La figure 2 est un schéma de principe d'un dispositif de soudage qui permet l'application d'une telle force pendant la formation du cordon de soudure.

Ce dispositif met en oeuvre un masque de soudure 4 qui comprend un passage traversant débouchant, du côté opposé à la tête laser, sur une ouverture 40 définissant une zone de soudure. Le masque comprend en outre une surface d'appui 41 entourant au moins en partie l'ouverture 40, afin d'assurer le placage du collecteur de courant 1 sur l'accumulateur 2.

Le masque de soudure présente une grande rigidité au moins selon la direction du faisceau laser. On entend par là que le masque est indéformable lors de l'application de contraintes mécaniques habituelles lors de la mise en oeuvre du procédé.

Pour assurer une distance de focale f fixe, le masque de soudure 4 est rigidement lié à la tête laser L.

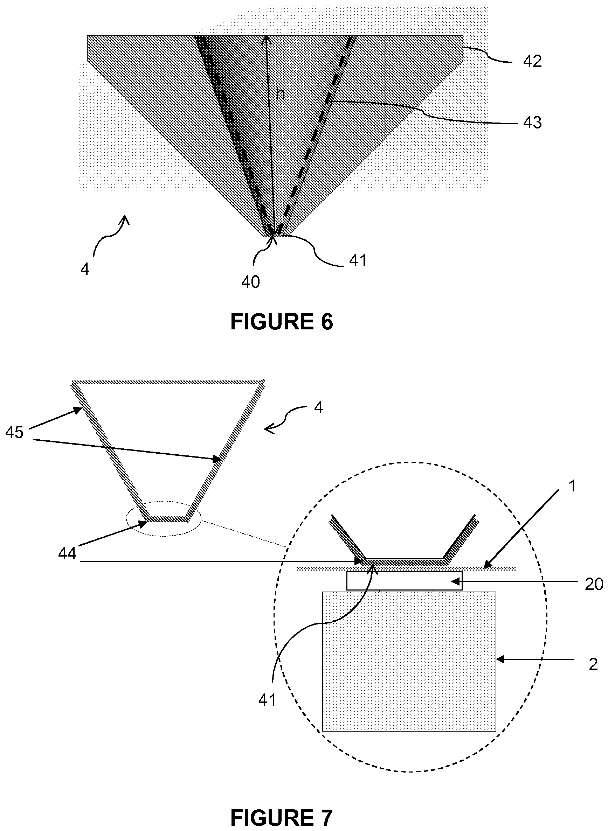

Ladite distance focale est choisie de manière à délivrer une énergie maximale et maîtrisée au niveau de la zone de soudure. Dans la mesure où c'est la dimension (dite également « hauteur », notée h sur la figure 6) du masque dans la direction du faisceau laser qui définit la distance entre la tête laser et la zone de soudure, ladite distance focale est définie en fonction de ladite dimension du masque dans la direction du faisceau laser et est indépendante de la force d'appui appliquée. Une fois cette distance focale optimale ajustée dans une étape initiale, elle est maintenue constante pendant toute la durée du procédé de soudage du ou des accumulateurs, la distance entre la tête laser et la zone de soudure ne variant pas. Les éventuelles différences de hauteur d'un accumulateur à l'autre sont quant à elles absorbées par le placage du masque contre le collecteur de courant.

Pour permettre d'ajuster la position du masque par rapport aux pièces à souder et de contrôler la force d'appui du masque, la tête laser L est mobile en translation dans une direction verticale (schématisée par la double flèche Z) par rapport à un châssis 5, par exemple au moyen d'un vérin ou d'un ressort. Ce système ne nécessite pas une gestion fine de la force d'appui, la distance focale du laser étant directement liée à la hauteur fixe du masque de soudure. Ledit châssis comporte en outre un support (non représenté) pour les pièces à souder.

Ainsi, quels que soient les variations dimensionnelles des accumulateurs ou les jeux de positionnement des accumulateurs dans le flasque, le masque peut toujours être mis en appui contre le collecteur de courant et appliquer la force nécessaire pour assurer un bon placage pendant la formation du cordon de soudure et garantir la distance focale du laser.

Au contraire, dans le dispositif décrit dans le document CN 206952362 précité, la liaison élastique entre le masque et la tête laser ne permet pas de garantir une distance focale optimale quelle que soit la hauteur des accumulateurs. La précision de la distance focale est en effet limitée par la précision de déplacement de la tête par rapport au masque, en lien avec l'effort d'appui appliqué. Par conséquent, la tenue mécanique de la zone de soudure peut varier d'un accumulateur à l'autre.

Un cas particulièrement délicat est le soudage du collecteur de courant sur le pôle + de l'accumulateur car, comme on le voit sur la figure 3, la surface de contact disponible pour la formation du cordon de soudure est particulièrement réduite. Ainsi, dans le cas d'un accumulateur de type 18650, le diamètre de la zone 20 disponible est de l'ordre de 9 mm.

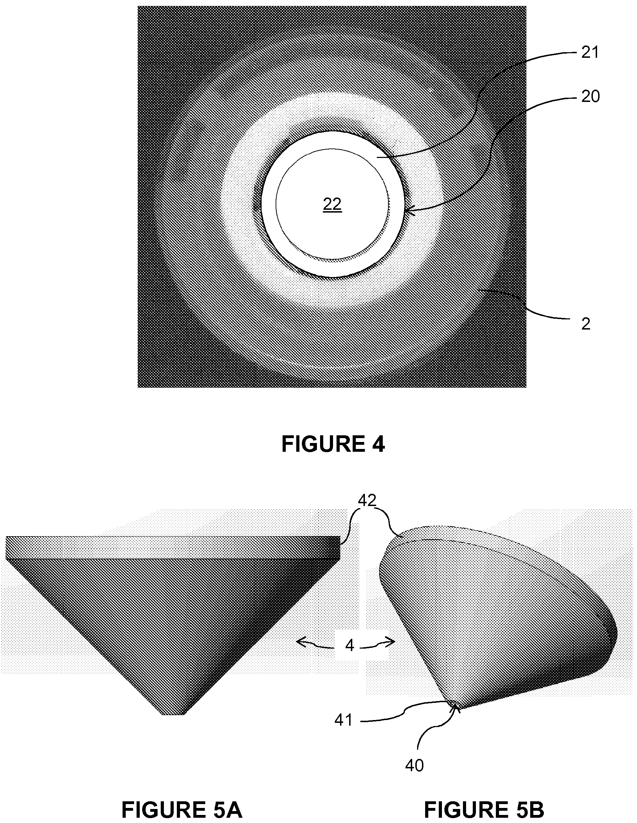

En référence à la figure 4, ladite zone disponible 20 est mise à profit pour former une zone 21 d'appui périphérique, destinée à recevoir la surface d'appui du masque, et une zone 22 de soudure centrale, dans laquelle pourra être formé le cordon de soudure. Pour optimiser la surface disponible, la zone d'appui 21 est de forme annulaire et s'étend à partir du bord extérieur de la zone disponible 20, mais il va de soi qu'en fonction de la configuration de la zone disponible il est possible de choisir toute autre forme pour la zone d'appui et la zone de soudure.

Pour la soudure, le masque vient donc en appui contre le collecteur de courant (non représenté sur la figure 4) pour le plaquer contre la zone d'appui 21 du pôle + de l'accumulateur.

Selon un mode de réalisation, la surface d'appui du masque est continue, c'est-à-dire d'un seul tenant. Ladite surface doit être suffisamment grande par rapport au périmètre de la zone de soudure pour assurer un bon placage des deux pièces dans la zone de soudure. On considère ainsi que la surface d'appui doit s'étendre sur au moins trois quarts du périmètre de la zone de soudure. Ainsi, dans le cas où la zone de soudure est circulaire, la surface d'appui s'étend avantageusement sur un secteur angulaire compris entre 270 et 360°.

Selon un mode particulier de réalisation, la surface d'appui entoure entièrement la zone de soudure.

Selon une autre forme d'exécution, la surface d'appui est discontinue, c'est-à-dire qu'elle comprend une pluralité de régions d'appui coplanaires séparées par des creux. De préférence, lesdites régions ont une surface suffisante et sont réparties de manière suffisamment régulière pour assurer un placage correct des deux pièces à souder. Par exemple, la surface d'appui peut être constituée de trois régions coplanaires en arc de cercle séparées d'une même distance. Une telle surface d'appui discontinue présente l'avantage de permettre l'évacuation des fumées générées lors de la soudure, et ainsi de réduire l'encrassement du masque. Ces dégagements peuvent également permettre de réduire les risques de contacts non-intentionnels en fonction de la géométrie des batteries à souder (ex. clinquants en attente de soudure, ou partiellement soudés), ou une configuration simple d'apport par soufflage de gaz spécifiques (ex. gaz d'inertage).

Les figures 5A et 5B représentent une vue extérieure de côté et en perspective d'un masque de soudure particulièrement adapté au soudage d'un collecteur de courant sur le pôle de l'accumulateur des figures 3 et 4, mais qui est également avantageux pour d'autres configurations.

Ledit masque 4 présente une forme extérieure tronconique, se rétrécissant de la tête laser vers la zone de soudure. La surface d'appui 41 est située dans un plan formant l'extrémité du masque opposée à la tête laser. Dans l'exemple illustré, la surface d'appui présente une forme annulaire continue, mais comme indiqué plus haut, ladite surface d'appui pourrait s'étendre seulement sur un secteur angulaire ou sur plusieurs secteurs angulaires distants les uns des autres.

Un avantage d'une telle forme tronconique est que l'encombrement du masque du côté des pièces à souder est minimisé.

Eventuellement, l'extrémité 42 du masque située du côté de la tête laser peut présenter une partie cylindrique, par exemple pour la fixation du masque à la tête laser.

La fixation du masque de soudure à la tête laser peut être effectuée par tout moyen approprié.

Le masque est réalisé en un matériau opaque au faisceau laser, par exemple un matériau métallique résistant à la chaleur et au faisceau laser en cas d'erreur de programmation. Un tel matériau peut être de l'inox, de l'acier revêtu d'une couche protectrice adaptée pour éviter la corrosion et donc la pollution des pièces à souder, de l'aluminium avantageusement anodisé noir pour bien absorber la lumière, etc.

Comme on le voit à la figure 6, le masque comprend un passage traversant 43 pour le passage du faisceau laser (schématisé en pointillés). De manière avantageuse, ledit passage 43 présente également une forme tronconique, ce qui permet de s'adapter à la géométrie du faisceau.

Le passage traversant 43 débouche sur une ouverture 40 située avantageusement au centre de la surface d'appui 41 et définit ainsi une zone de soudure sur les pièces à souder.

Selon l'invention, le masque de soudure comprend un revêtement électriquement isolant, de sorte à minimiser les risques de court-circuit entre différentes parties de la batterie lors de la soudure. Dans un procédé d'assemblage conventionnel, ces risques sont pris en compte en plaçant entre les accumulateurs des barrières électriquement isolantes, ce qui augmente le coût et le poids de la batterie. Le revêtement électriquement isolant permet de s'affranchir de ces dispositifs de protection.

Ledit revêtement est appliqué sur la surface d'appui et sur au moins une partie de la surface extérieure du masque.

Ledit revêtement peut comprendre des matériaux différents selon la région du masque. Ainsi, en référence à la figure 7, la surface d'appui et la surface extérieure adjacente à ladite surface d'appui sont soumises à des contraintes mécaniques et thermiques importantes en raison de la force d'appui et de la température élevée mises en oeuvre lors de la soudure. Dans cette partie du masque, le revêtement doit avantageusement pouvoir résister à des températures de l'ordre de 1085°C (température de fusion du cuivre, qui est le matériau à souder le plus critique thermiquement lors de l'assemblage d'une batterie). Par ailleurs, le matériau du revêtement doit pouvoir être déposé sous la forme d'une couche mince (typiquement, de l'ordre d'une dizaine de micromètres) et uniforme pour ne pas dégrader la focalisation du faisceau laser. Par exemple, une céramique (telle que de l'alumine) peut être déposée sur cette partie du masque. Cette céramique peut supporter une température de pointe de 1650°C ; de plus, elle présente une très bonne résistance à l'usure (dureté supérieure à 800 HV) et une assez bonne résistance aux frottements, tout en restant inerte chimiquement. L'épaisseur déposée peut être comprise entre 5 µm et 20 µm, ce qui est compatible avec la tolérance sur la distance focale acceptable par l'équipement (ladite tolérance étant de l'ordre de ± 1,5 mm). Le dépôt de céramique peut être réalisé par vaporisation physique (PVD) ou par dépôt chimique en phase vapeur (CVD). Eventuellement, un rodage peut être mis en oeuvre pour améliorer la planéité et l'uniformité de l'épaisseur du revêtement au niveau de la surface d'appui.

En fonction du matériau et de son épaisseur, une étape de rodage ou planarisation du revêtement peut être effectuée au niveau de la surface d'appui afin de garantir à la fois la planéité de surface, et un bon contrôle dimensionnel de la hauteur finale du masque, en lien avec la distance focale souhaitée.

Sur une portion de la surface externe plus éloignée de la surface d'appui, les contraintes mécaniques et thermiques sont moins importantes. En revanche, cette portion est susceptible de venir en contact avec des éléments de la batterie en cours d'assemblage ou du système de soudage. Un matériau polymère, tel que le poly(fluorure de vinylidène) (PVDF) ou le Polytétrafluoroéthylène (PTFE), susceptible d'absorber des chocs sans être endommagé, peut être employé.

Dans le mode de réalisation illustré sur la figure 7, le revêtement électriquement isolant comprend une première partie 44 en céramique s'étendant sur la surface d'appui et une première portion de la surface extérieure adjacente à la surface d'appui, et une seconde partie 45 en polymère s'étendant sur une seconde portion de la surface extérieure adjacente à la première portion, jusqu'à l'extrémité du masque opposée à la surface d'appui.

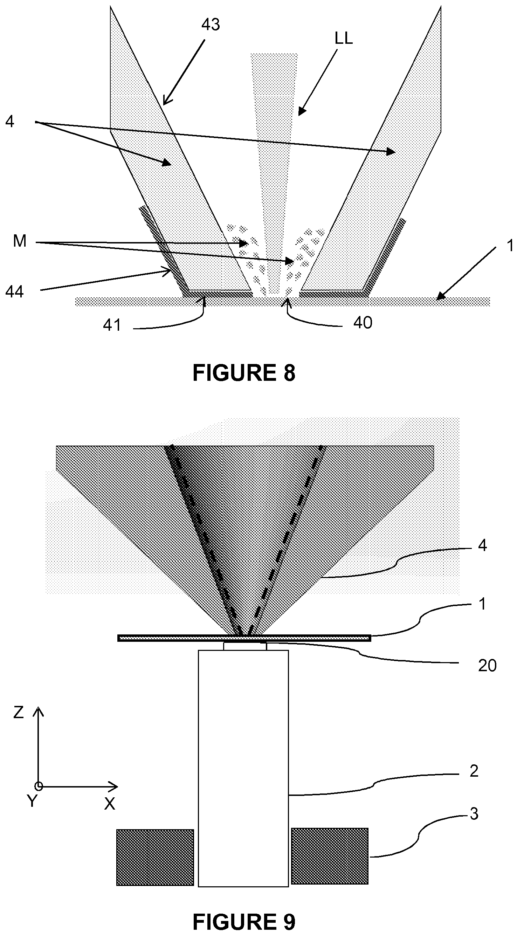

De préférence, comme illustré sur la figure 8, aucun revêtement n'est appliqué sur la surface intérieure du masque 4 définissant le passage traversant 43, afin d'éviter un ruissellement du matériau M projeté dans le masque lors de la soudure (le faisceau laser est désigné par le repère LL), qui retomberait sur la zone de soudure et viendrait la polluer. En laissant nue la surface intérieure métallique du masque, le matériau projeté tend à se fixer sur ladite surface. Le masque peut être nettoyé périodiquement, par exemple par un usinage, de sorte à retirer les dépôts de matériau accumulés.

Pour pouvoir réaliser un cordon de soudure dans la zone de soudure sans déplacer les pièces à souder, la tête laser est pourvue d'un système optique de focalisation programmable qui permet d'orienter sélectivement le faisceau laser au sein de la zone de soudure. Un tel système optique comprend typiquement deux miroirs orientables de manière précise et rapide. Dans le cas d'un laser pulsé, le cordon de soudure est formé d'une pluralité de points de soudure correspondant chacun à une position de focalisation successive. Dans le cas d'un laser continu, le cordon de soudure est formé d'une ligne, d'une succession de segments ou d'une courbe continue dont le parcours est défini par le mouvement du faisceau.

Grâce à l'objectif à champ plat, les conditions de focalisation, et donc la qualité du cordon de soudure, sont identiques en chaque point de la zone de soudure.

La figure 9 représente le masque de soudure 4 en appui sur le collecteur de courant 1 en vue de sa soudure sur le pôle + de l'accumulateur.

La surface d'appui du masque est centrée par rapport à la zone disponible 20 du pôle + de l'accumulateur et procure donc un placage stable du collecteur de courant sur ledit pôle. La zone de soudure est donc également centrée par rapport audit pôle. Un cordon de soudure peut donc être formé dans ladite zone.

Compte tenu de la géométrie de la zone de soudure, le cordon de soudure présente avantageusement une forme circulaire. Bien sûr, pour d'autres applications, le cordon de soudure pourrait présenter une autre forme.

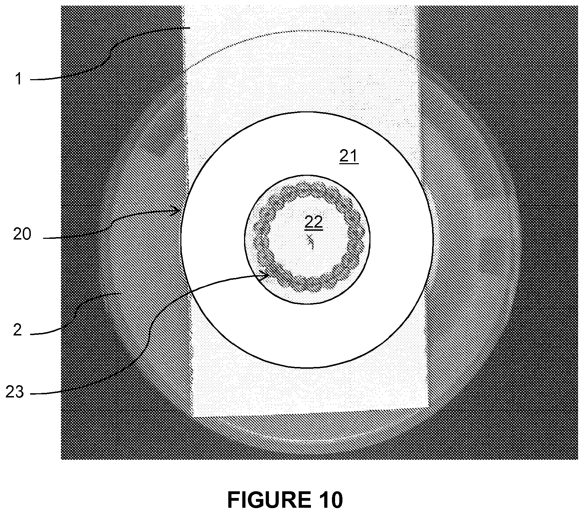

Comme illustré sur la figure 10, le cordon de soudure 23 est constitué de 20 points se recouvrant légèrement, centrés sur un cercle de 4 mm de diamètre. Compte tenu de la taille des points de soudure (diamètre de 0,6 mm), le diamètre extérieur du cordon de soudure est de l'ordre de 4,6 mm. Ce diamètre est choisi pour être strictement inférieur au diamètre intérieur de l'ouverture formée dans le masque de soudure (qui est dans cet exemple de 5,2 mm) afin de ne pas risquer de souder le masque au collecteur de courant, tout en tenant compte d'éventuelles variations dimensionnelles qui pourraient induire des décalages de position par rapport à une position nominale.

Le diamètre extérieur de la zone d'appui 21 du masque est de 8 mm ; la largeur de la surface d'appui annulaire est donc de 1,4 mm, qui est, dans l'exemple considéré, suffisante pour assurer un bon placage des deux pièces entre elles.

La tête laser et le support portant les pièces à souder sont mobiles l'un par rapport à l'autre dans trois directions de l'espace, afin de permettre un soudage successif de plusieurs accumulateurs. Selon un mode de réalisation, la tête laser et le support peuvent être mobiles selon des axes différents. De manière alternative, le support peut être fixe et la tête laser mobile pour amener le masque en regard de chaque accumulateur à souder.

Par exemple, en référence à la figure 9, une fois que le collecteur de courant a été soudé sur un accumulateur, le masque et la tête laser sont relevés (selon l'axe Z) dans une position suffisamment haute pour ne pas interférer avec les pièces à souder. Le support portant le flasque et/ou la tête munie du masque sont déplacés dans le plan X, Y pour amener le masque en regard du pôle d'un autre accumulateur à souder au collecteur de courant. Puis, la tête et le masque de soudure sont à nouveau descendus pour mettre le masque de soudure en appui contre le collecteur de courant. Un nouveau cordon de soudure peut donc être formé comme décrit précédemment.

Ainsi, l'assemblage de la batterie n'est pas affecté par d'éventuelles différences de hauteur d'un accumulateur à l'autre, et l'ensemble des cordons de soudure peut être réalisée de manière répétable.

Comme indiqué plus haut, la présente invention n'est pas limitée au soudage d'un collecteur de courant sur un accumulateur. Dans le domaine de l'assemblage des batteries, l'invention peut également s'appliquer pour souder deux collecteurs de courant. Par exemple, un collecteur de courant peut être constitué d'un feuillet de cuivre de 500 µm d'épaisseur et un autre collecteur de courant, soudé sur celui-ci, est constitué d'un feuillet d'HILUMIN^{™} de 300 µm d'épaisseur. Aucun outillage spécifique n'est nécessaire pour la soudure. On peut former successivement une pluralité de cordons de soudure circulaires en plaquant les deux feuillets dans la zone de soudure respective au moyen du masque décrit plus haut.

Dans le cas du soudage laser de pièces plastiques, la soudure est réalisée par transparence : les pièces à souder, qui sont constituées de deux matériaux différents, l'un transparent à la radiation laser et l'autre absorbant, sont superposées. Le faisceau laser, focalisé à la jonction des deux pièces, traverse le matériau transparent et fait entrer en fusion le matériau absorbant. Le soudage des plastiques est alors réalisé par la solide liaison issue du refroidissement rapide de l'ensemble après le passage du faisceau laser. La technologie laser est différente de celle utilisée pour le soudage métallique car elle nécessite l'utilisation d'un laser avec une longueur d'onde adaptée à la couleur des pièces à souder.

## Revendications

1. Procédé de soudage laser d'une première pièce sur une seconde pièce, comprenant :
- la mise en place de la première pièce (1) sur la seconde pièce (2),
- l'application d'un masque de soudure (4) comprenant une surface d'appui plane (41) contre la première pièce (1) pour plaquer ladite première pièce sur la seconde pièce (2), ledit masque de soudure (4) comprenant un passage traversant (43) pour un faisceau laser, définissant une zone de soudure sur la première pièce, la surface d'appui (41) entourant au moins en partie ledit passage,
- l'émission d'un faisceau laser par une tête (L) dans ledit passage du masque de soudure, pour former un cordon de soudure liant la première pièce à la seconde pièce dans ladite zone de soudure,
dans lequel le masque de soudure (4) est rigide et rigidement lié à la tête laser (L) et la distance focale (f) du laser est constante, ladite distance focale constante étant assurée par ledit masque rigide, ledit procédé étant **caractérisé en ce que** le masque de soudure (4) comprend un revêtement électriquement isolant appliqué sur au moins une partie d'une surface externe du masque de soudure (4).

2. Procédé selon la revendication 1, dans lequel les première et seconde pièces et le masque de soudure restent fixes pendant la formation de la totalité du cordon de soudure.

3. Procédé selon l'une des revendications 1 à 2, dans lequel la tête laser comprend un système optique de focalisation programmable comprenant deux miroirs orientables pour positionner le faisceau laser à un emplacement déterminé de la zone de soudure.

4. Procédé selon l'une des revendications 1 à 3, dans lequel la première pièce est un collecteur de courant métallique et la seconde pièce est un accumulateur électrochimique métal-ion.

5. Procédé d'assemblage d'une batterie comprenant une pluralité d'accumulateurs, comprenant :
- le collage de chaque accumulateur (2) dans un flasque (3),
- l'établissement d'une connexion électrique entre au moins deux accumulateurs (2) par un collecteur de courant (1), par soudage laser dudit collecteur de courant sur un pôle respectif de chaque accumulateur au moyen du procédé de la revendication 4.

6. Procédé selon la revendication 5, dans lequel la position de la tête munie du masque de soudure est ajustée pour chaque accumulateur, de sorte à compenser une différence de hauteur entre deux accumulateurs.

7. Dispositif de soudage laser d'une première pièce sur une seconde pièce, comprenant :
- un châssis (5) comprenant un support pour les première et seconde pièces à souder,
- une tête laser (L) mobile en translation verticale par rapport au châssis,
- un masque de soudure (4) rigide et rigidement lié à la tête laser (L) de sorte à assurer une distance focale (f) constante du faisceau laser, comprenant une surface d'appui (41) plane opposée à la tête laser, et un passage traversant (43) pour un faisceau laser émis par la tête, ledit passage débouchant dans une ouverture (40) de la surface d'appui définissant une zone de soudure, ledit dispositif étant **caractérisé en ce que** le masque de soudure (4) comprend un revêtement électriquement isolant sur au moins une partie de sa surface externe.

8. Dispositif selon la revendication 7, dans lequel la tête laser (L) comprend un système optique de focalisation programmable comprenant deux miroirs orientables pour positionner le faisceau laser à un emplacement déterminé de la zone de soudure.

9. Dispositif selon l'une des revendications 7 à 8, dans lequel le masque de soudure présente une forme extérieure tronconique se rétrécissant de la tête laser vers la surface d'appui.

10. Dispositif selon l'une des revendications 7 à 9, dans lequel le passage traversant (43) présente une forme tronconique se rétrécissant de la tête laser vers la zone de soudure.

11. Dispositif selon l'une des revendications 7 à 10, dans lequel la surface d'appui s'étend de manière continue autour de la zone de soudure.

12. Dispositif selon l'une des revendications 7 à 11, dans lequel la surface d'appui s'étend de manière discontinue autour de la zone de soudure.

13. Dispositif selon l'une des revendications 7 à 12, dans lequel ledit revêtement comprend une portion (44) en céramique s'étendant sur la surface d'appui et sur une première portion de la surface extérieure adjacente à ladite surface d'appui.

14. Dispositif selon l'une des revendications 7 ou 13, dans lequel ledit revêtement comprend une portion (45) en polymère s'étendant sur une seconde portion de la surface extérieure, opposée à la surface d'appui et adjacente à la première portion.

15. Dispositif selon l'une des revendications 7 à 14, dans lequel le masque de soudure présente une surface intérieure dépourvue dudit revêtement électriquement isolant.

## Patentansprüche

1. Verfahren zum Laserschweißen einer ersten Komponente an eine zweite Komponente, umfassend:
- das Platzieren der ersten Komponente (1) an der zweiten Komponente (2),
- das Auflegen einer Schweißmaske (4) mit einer ebenen Auflagefläche (41) auf der ersten Komponente (1), um die erste Komponente an die zweite Komponente (2) zu pressen, wobei die Schweißmaske (4) einen durchgehenden Durchgang (43) für einen Laserstrahl aufweist, der eine Schweißzone auf der ersten Komponente definiert, wobei die Auflagefläche (41) den Durchgang zumindest teilweise umgibt,
- das Senden eines Laserstrahls mittels eines Kopfs (L) in den Durchgang der Schweißmaske, um eine Schweißnaht zu bilden, die die erste Komponente mit der zweiten Komponente in der Schweißzone verbindet,
wobei die Schweißmaske (4) starr ist und starr mit dem Laserkopf (L) verbunden ist und die Brennweite (f) des Lasers konstant ist, wobei die konstante Brennweite durch die starre Maske gewährleistet wird, wobei das Verfahren **dadurch gekennzeichnet ist, dass** die Schweißmaske (4) eine elektrisch isolierende Beschichtung umfasst, die auf mindestens einen Teil einer Außenfläche der Schweißmaske (4) aufgelegt wird.

2. Verfahren nach Anspruch 1, wobei die erste und die zweite Komponente und die Schweißmaske während der Bildung der gesamten Schweißnaht fest bleiben.

3. Verfahren nach einem der Ansprüche 1 bis 2, wobei der Laserkopf ein programmierbares optisches Fokussiersystem mit zwei ausrichtbaren Spiegeln umfasst, um den Laserstrahl an einer bestimmten Stelle der Schweißzone zu positionieren.

4. Verfahren nach einem der Ansprüche 1 bis 3, wobei die erste Komponente ein metallischer Stromsammler ist und die zweite Komponente ein elektrochemischer Metall-Ionen-Akkumulator ist.

5. Verfahren zum Zusammenbauen einer Batterie, die eine Vielzahl von Akkumulatoren umfasst, umfassend:
- das Einkleben jedes Akkumulators (2) in einen Flansch (3),
- das Herstellen einer elektrischen Verbindung zwischen mindestens zwei Akkumulatoren (2) durch einen Stromsammler (1) durch Laserschweißen des Stromsammlers an einem jeweiligen Pol jedes Akkumulators mittels des Verfahrens nach Anspruch 4.

6. Verfahren nach Anspruch 5, wobei die Position des mit der Schweißmaske versehenen Kopfes für jeden Akkumulator so eingestellt wird, dass ein Höhenunterschied zwischen zwei Akkumulatoren ausgeglichen wird.

7. Vorrichtung zum Laserschweißen einer ersten Komponente an einer zweiten Komponente, umfassend:
- ein Gestell (5), das eine Halterung für die erste und die zweite zu schweißende Komponente umfasst,
- einen Laserkopf (L), der in Bezug auf das Gestell vertikal verschiebbar ist,
- eine starre und starr mit dem Laserkopf (L) verbundene Schweißmaske (4), so dass eine konstante Brennweite (f) des Laserstrahls gewährleistet ist, mit einer ebenen Auflagefläche (41) gegenüber dem Laserkopf und einem durchgehenden Durchgang (43) für einen von dem Kopf gesendeten Laserstrahl, wobei der Durchgang in eine Öffnung (40) der Auflagefläche mündet, die eine Schweißzone definiert, wobei die Vorrichtung **dadurch gekennzeichnet ist, dass** die Schweißmaske (4) eine elektrisch isolierende Beschichtung auf mindestens einem Teil ihrer Außenfläche umfasst.

8. Vorrichtung nach Anspruch 7, wobei der Laserkopf (L) ein programmierbares optisches Fokussiersystem mit zwei ausrichtbaren Spiegeln umfasst, um den Laserstrahl an einer bestimmten Stelle der Schweißzone zu positionieren.

9. Vorrichtung nach einem der Ansprüche 7 bis 8, wobei die Schweißmaske eine kegelstumpfförmige Außenform aufweist, die sich vom Laserkopf zur Auflagefläche hin verjüngt.

10. Vorrichtung nach einem der Ansprüche 7 bis 9, wobei der durchgehende Durchgang (43) eine kegelstumpfförmige Form aufweist, die sich vom Laserkopf zur Schweißzone hin verjüngt.

11. Vorrichtung nach einem der Ansprüche 7 bis 10, wobei sich die Auflagefläche kontinuierlich um die Schweißzone herum erstreckt.

12. Vorrichtung nach einem der Ansprüche 7 bis 11, wobei sich die Auflagefläche diskontinuierlich um die Schweißzone herum erstreckt.

13. Vorrichtung nach einem der Ansprüche 7 bis 12, wobei die Beschichtung einen Abschnitt (44) aus Keramik umfasst, der sich über die Auflagefläche und über einen ersten Abschnitt der Außenfläche angrenzend an die Auflagefläche erstreckt.

14. Vorrichtung nach einem der Ansprüche 7 oder 13, wobei die Beschichtung einen Abschnitt (45) aus Polymer umfasst, der sich über einen zweiten Abschnitt der Außenfläche gegenüber der Auflagefläche und angrenzend an den ersten Abschnitt erstreckt.

15. Vorrichtung nach einem der Ansprüche 7 bis 14, wobei die Schweißmaske eine Innenfläche aufweist, die frei von der elektrisch isolierenden Beschichtung ist.

## Claims

1. A method of laser welding a first component to a second component, comprising:
- placing the first component (1) on the second component (2),
- placing a welding mask (4) having a flat support surface (41) on the first component (1) to press the first component against the second component (2), the welding mask (4) having a continuous passage (43) for a laser beam defining a welding zone on the first component, the support surface (41) at least partially surrounding the passage,
- sending a laser beam by means of a head (L) into the passage of the welding mask to form a weld joining the first component to the second component in the welding zone,
wherein the welding mask (4) is rigid and rigidly connected to the laser head (L) and the focal length (f) of the laser is constant, the constant focal length being ensured by the rigid mask, the method being **characterized in that** the welding mask (4) comprises an electrically insulating coating applied to at least a part of an outer surface of the welding mask (4).

2. The method according to claim 1, wherein the first and second components and the welding mask remain fixed during the formation of the entire weld.

3. The method according to any one of claims 1 to 2, wherein the laser head comprises a programmable optical focusing system with two alignable mirrors to position the laser beam at a specific location of the welding zone.

4. The method according to any one of claims 1 to 3, wherein the first component is a metallic current collector and the second component is an electrochemical metal-ion accumulator.

5. A method of assembling a battery comprising a plurality of accumulators, comprising:
- gluing each accumulator (2) into a flange (3),
- establishing an electrical connection between at least two accumulators (2) by means of a current collector (1) by laser welding the current collector to a respective pole of each accumulator by means of the method according to claim 4.

6. The method according to claim 5, wherein the position of the head provided with the welding mask is adjusted for each accumulator in such a way that a height difference between two accumulators is compensated.

7. Apparatus for laser welding a first component to a second component, comprising:
- a frame (5) comprising a holder for the first and second components to be welded,
- a laser head (L) that can be moved vertically in relation to the frame,
- a rigid welding mask (4) rigidly connected to the laser head (L) so as to ensure a constant focal length (f) of the laser beam, comprising a flat support surface (41) facing the laser head and a continuous passage (43) for a laser beam emitted by the head, the passage opening into an opening (40) in the support surface defining a welding zone, the device being **characterized in that** the welding mask (4) comprises an electrically insulating coating on at least part of its outer surface.

8. The device according to claim 7, wherein the laser head (L) comprises a programmable optical focusing system with two alignable mirrors to position the laser beam at a specific location of the welding zone.

9. The device according to any one of claims 7 to 8, wherein the welding mask has a frustoconical outer shape which tapers from the laser head towards the support surface.

10. The device according to any one of claims 7 to 9, wherein the continuous passage (43) has a frustoconical shape tapering from the laser head towards the welding zone.

11. The device according to any one of claims 7 to 10, wherein the support surface extends continuously around the welding zone.

12. The device according to any one of claims 7 to 11, wherein the support surface extends discontinuously around the welding zone.

13. The device according to any one of claims 7 to 12, wherein the coating comprises a portion (44) of ceramic extending over the support surface and over a first portion of the outer surface adjacent to the support surface.

14. The device according to any one of claims 7 or 13, wherein the coating comprises a portion (45) of polymer extending over a second portion of the outer surface opposite the support surface and adjacent the first portion.

15. The device according to any one of claims 7 to 14, wherein the welding mask has an inner surface that is free of the electrically insulating coating.
